# EUROPEAN PATENT APPLICATION

(11) **EP 2 578 468 A1**
(43) Date of publication of application: **10.04.2013**
(21) Application number: 11789288.5
(22) Date of filing: 27.05.2011
(51) Int. Cl.: B62B 3/02

(54) **FOLDING SHOPPING TROLLEY FOR CARRYING PURCHASES**

(30) Priority: 18.05.2011 ES 201100547; 04.06.2010 ES 201000732
(71) Applicant: PFR Trolleys Limited, Birkirkara, BKR3000 (MT)
(72) Inventor: RAVNBORG, Paul Freddy, 29650 Mijas (Málaga) (ES)
(74) Representative: Riera Blanco, Juan Carlos
(86) International application number: PCT/ES2011/000170
(87) International publication number: WO 2011/151482

(57) **Abstract**

Folding shopping trolley for carrying purchases, comprising a foldable structure (2) with wheels (3), having, between the front (4) and rear (6) legs thereof, horizontal crossbars (8) with flexible foldable bags (9) that can be removed using upper handles (12), said bags being attached at the top and bottom by means of attachments (10), for example hooks, and dimensioned in such a way as to sit one above the other in a stepped arrangement, open at the top. The bags (9) have hinged sections (11) secured to the diagonally opposite vertices on both sides. The trolley optionally has a lower platform (13) hinged to or superposed on crossbars. Optionally, the front wheels (3) are larger than the rear wheels, with, with the inclusion of a coupling piece (14) for attaching the rear legs (6) to the latter. There is a protective cover (15) made of canvas or another material. The trolley also includes support means (16) for the bags (9) positioned between the horizontal crossbars (8).

## Description

### OBJECT OF THE INVENTION

The invention as stated in the title of this specification, refers to a collapsible shopping cart/trolley for purchase and for transport, contributing to the function which is intended to improve advantageous features which will be described in detail below, that represent an innovative alternative to that already known in the prior art in this field.

In particular, the invention relates to a folding shopping cart/trolley which, being the type intended to facilitate transport by foot or car of small consumer goods from retail outlets they have acquired to the car or to the home, eliminating the need to carry them in bags or boxes, has the particularity of having an innovative structural configuration that distinguishes front carts/trolleys known in the market for the same purpose, since among other peculiarities, its unique design is also developed to allow use conveniently and practice within the establishment/supermarket itself, rather than using the shopping trolleys provided by the supermarkets, thereby avoiding the need to find one available, use a coin to release and having to return it to its place.

### SCOPE OF THE INVENTION

The scope of the present invention falls within the industrial sector dedicated to the manufacture of household items objects, being particularly concentrated in the area of the shopping trolleys.

### BACKGROUND OF THE INVENTION

As is known, folding shopping carts/trolleys are widely known for some time, form a great aid element to avoid having to carry the weight of the items and products purchased to transport them home, especially when we travel on foot. However, most of this type of carts/trolleys is that function only and are not suitable for use within the premises/supermarkets, since, generally, is configured from a metal tubular structure provided with drive wheels which incorporates a single bag of flexible material, usually opaque, and therefore not to view the content of it, which is inappropriate for the facility staff clearly see what is in it and we want to acquire.

Furthermore, the carts/trolleys that are available to customers in the establishments to facilitate the placement of products you wish to purchase, which are not available in all establishments, only in supermarkets and department stores, not being available in retail stores, flea markets, etc., and some of the latter are formed by long corridors.

Such type of cart/trolley also can be used only within the precincts of the establishment to which they belong and, besides having to find one available, which is sometimes difficult depending on the day and place, it is usually necessary to provide for the provision of a type particular currency to release your anchor, which recover only to put it back in place after use, so after making the purchase, if we went by car, we move the vehicle, download the purchase and bring back the cart/trolley to anchor location to retrieve the coin, and if we went on foot to do our shopping using our own shopping cart, we will have to move the bought articles, from the supermarket's shopping cart to our own shopping cart and then, return the supermarket's cart to its original anchor post.

In addition, another of the disadvantages of the cars of supermarkets and hypermarkets is the weight they have and the difficulty involved in handling them, both when empty and when full especially and particularly when the ground is not completely flat and / or smooth causing real difficulties in its use for the elderly or weak.

Consequently, in the one case as in the other we have to perform a lot of operations cumbersome and full of problems that could be avoided by having a cart/trolley suitable for both functions: making the purchase and transport. A cart/trolley, that remains our property, you can take with you from the car or at home with you and make purchases directly within the establishment, without having to worry about if that establishment has at its disposal carts/trolleys or not.

The applicant is not aware that in the actual state of the Art, there exists a shopping cart for these activities, which presents characteristics and structure similar to those we claim for this invention.

In this regard, there must be said that the applicant himself owns a patent on a cart with a similar application as the present invention which however, although it fulfils the function of being used within facilities and supermarkets, and is collapsible in order to take it home in the car, it presents several aspects which is different, it is not well adapted to carry it along the streets and it is not adapted either to climb stairs. In addiction, said patent presents a completely different configuration from the present invention.

### SUMMARY OF THE INVENTION

Thus, the collapsible cart for purchase and transport to the present invention proposes is configured as a remarkable novelty in its scope, and that under implementation and is exhaustively successfully reach the abovementioned objectives as suitable , while the details that make this possible characterizing and distinguishing it from what is already known in the market, conveniently thoroughly exposed and then developed so as properly collected in the final claims that accompany the present specification.

Namely, then, what the invention proposes, is a collapsible cart/trolley of the type used to transport goods and, at the same time, serves also to perform it within the facility for which is formed from a tubular structure folding, preferably of metal, and provided with wheels, which is formed essentially by two front feet long, connected superiorly by a handle driving and shorter hind legs are articulated in the middle of the front legs, existing between such pairs of legs and a lower platform several horizontal rails arranged at different heights.

Such structure with said platform and said crossbars, in folded position, lies flat occupying minimum space (only the width between the pair of legs), and in position of use, is suitable to incorporate a number of bags of flexible material,(similar to the ones the retailers sell to avoid the small plastic bags), which are provided with means to notice the contents, with the addition that the mouth of these bags is completely open like a box or a basket, and are also provided with means for being completely folded flat for storage when not in use, it being provided moreover that the bags have handles and so can be used as any conventional bag.

Thus, the cart once assembled, will include several bags hanging from the rungs of the tubular structure, which will be arranged staggered at the front thereof, and will also have one or more bags arranged in the rear of the structure arranged on the lower platform, being perfectly visible and accessible within all of them to go comfortably placing items, because as said with the open mouth are shaped bags.

It should be noted also that for the transfer of the cart/trolley and in order to protect its contents when full, either from rain, dust or other foreign or a possible fall or theft of any items contained therein, it is contemplated the existence of a tarpaulin or other suitable material sized to cover the front covering at least the mouthpiece of all bags front, it being provided clamping means laterally to attach the front legs of the structure.

According to the invention, it is also important to note that since one of the main features of the proposed cart/trolley is to allow use to bring products to the home, which usually means having to climb steps or flights of stairs, is planned alternatively, the possibility of eliminating the lower platform cart or optionally said bottom plate to provide a coupling system which permits a structure thereof disassembled easily for if the user so prefers.

So with such disposal, it becomes possible that up the stairs with the full cart, folding back legs and dragging the front part only with you to accomplish each step.

To facilitate this function, moreover, the front wheels will be dimensioned so as to adapt better to measures generally have the steps of a conventional ladder, a coupling being provided also in the lower part of the front legs to the back legs fix and avoid that in this operation the wheels may fold or bend.

In a simplified version of the cart and, therefore, more economical to manufacture, also contemplates the removal of the bottom plate, removing the wheels of the rear legs, such that said support legs act only when the cart is stopped.

Finally, we mention that, in order to improve such support and prevent warping of the bags when they are filled also overexertion of such fasteners is contemplated incorporating means to support them in the spaces shall be located between the different horizontal beams, so that each bag serving to rest on them.

Said support means can be configured as metal plates or hard plastic or other suitable rigid material, in which case you have a layered configuration according to the size and dimensions of the bags so that they rest on them, or as bands of, plastic, leather or any other suitably resilient flexible material, provided in any case, preferably in pairs, between two horizontal crossbars which is incorporated in a pouch.

Seen above, it is clearly stated that described collapsible cart for purchase and to transport an innovation of structural and constitutive features hitherto unknown for this purpose, reasons linked to its advantageous practical, give it a sufficient basis for get the exclusive privilege of being requested.

### DESCRIPTION OF THE DRAWINGS

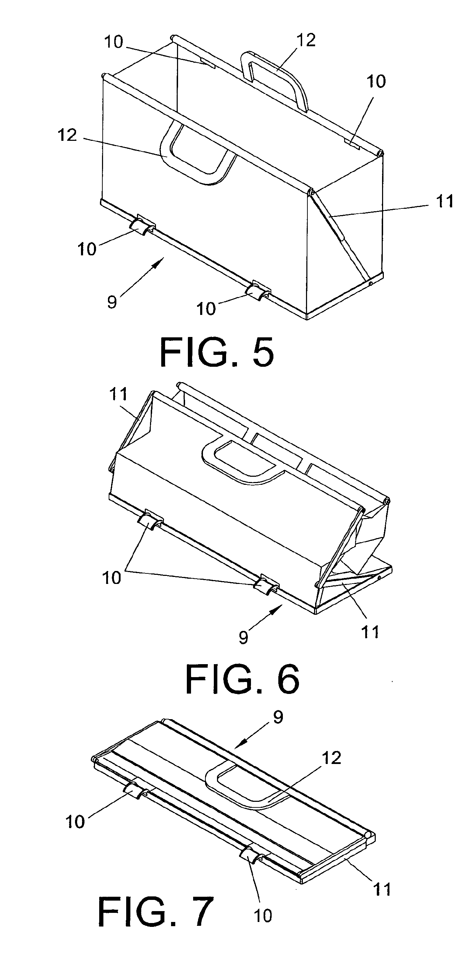

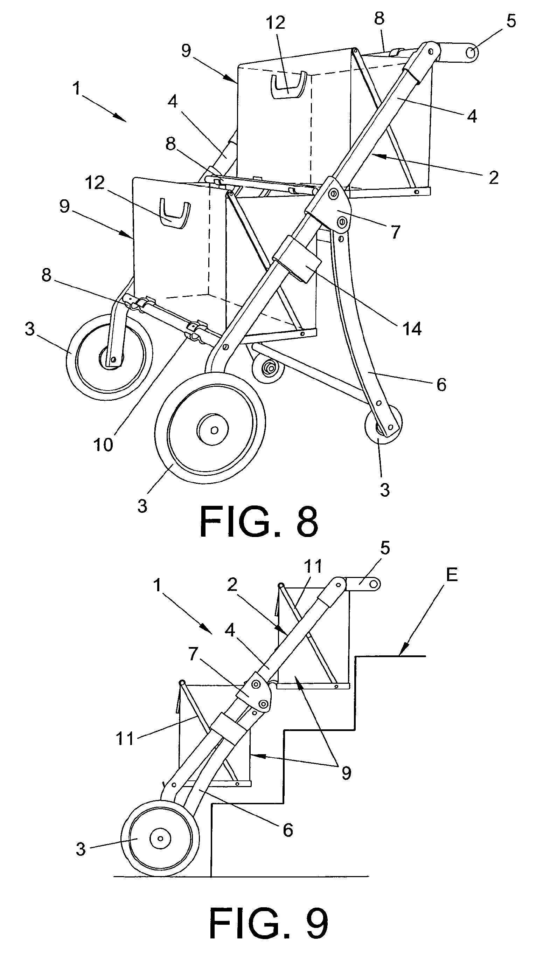

To complement the description being made and with the object of assisting in a better understanding of the characteristics of the invention, attached to this specification as an integral part thereof, a set of drawings, in which matter illustrative and not limiting, represent the following:
The figures number 1 and 2. - Show respective perspective views of a first embodiment of the collapsible cart of the invention, appreciating them the main parts and elements that comprise, as well as the configuration and arrangement thereof.

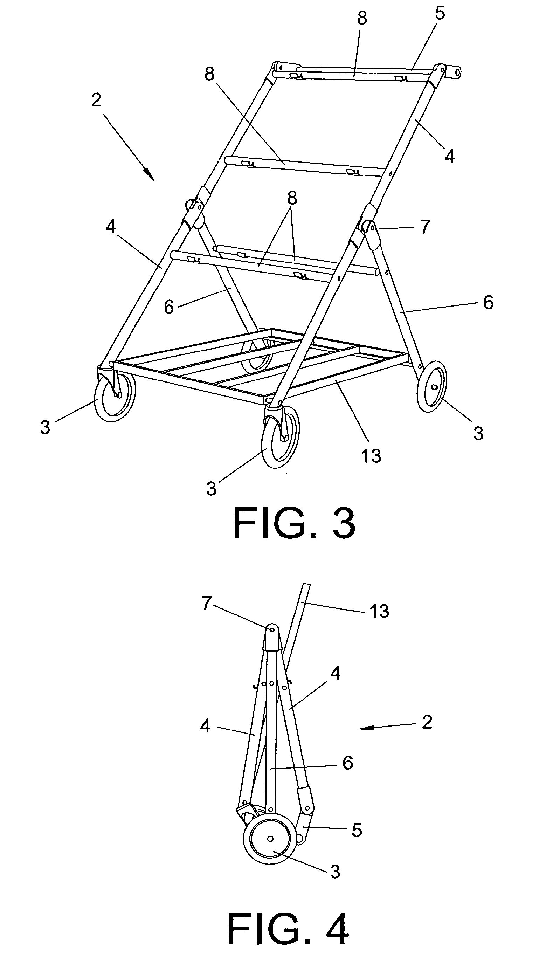

Figures 3 and number 4. - They show two views, in perspective and side elevation respectively, of the tubular structure of the exemplary cart, according to the invention shown in the preceding figures, which is shown in position for use and folded.
Number Figures 5, 6 and 7. - Shows three perspective views of bags embodying the collapsible cart of the invention, these being shown in the open bag, half folded and fully folded.
Number Figures 8 and 9. - Show respective views in perspective and side elevation of one alternative embodiment of the cart/trolley of the invention, in which Figure 8 shows in plan use position and Figure 9 in the folded position for climbing stairs.

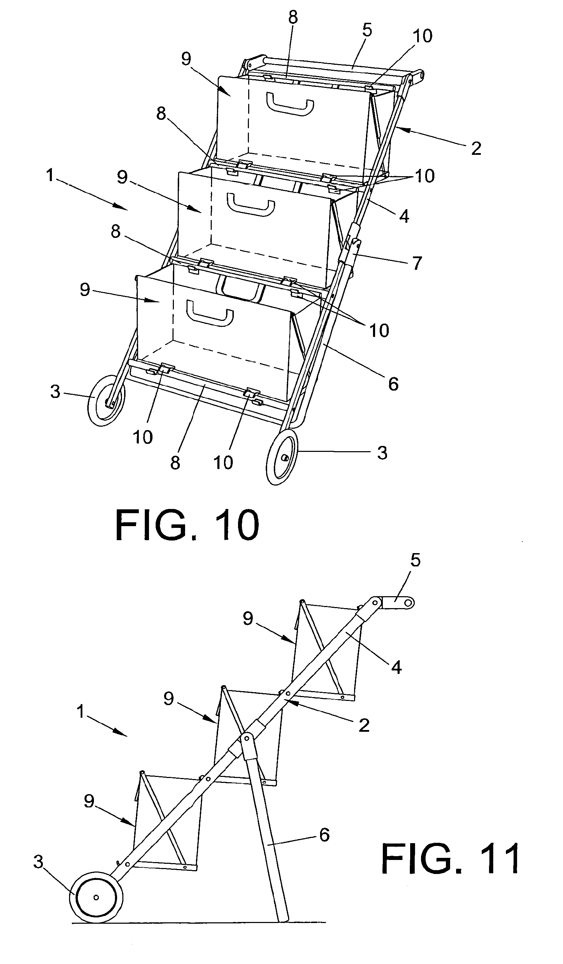

Figures 10 and 11. - Show two views in perspective and side elevation of a third embodiment of the invention, in this case rear wheels or simplified without bottom plate.
Figure number 12. - Shows a front perspective view of an embodiment of the car/trolley according to the invention, which shows in its structure incorporating support means for the bags in an embodiment thereof as platens rigid material.
Figure number 13. - Shows a lateral elevation view of the same example of basket shown in the previous figure with the same type of support means for the bags.

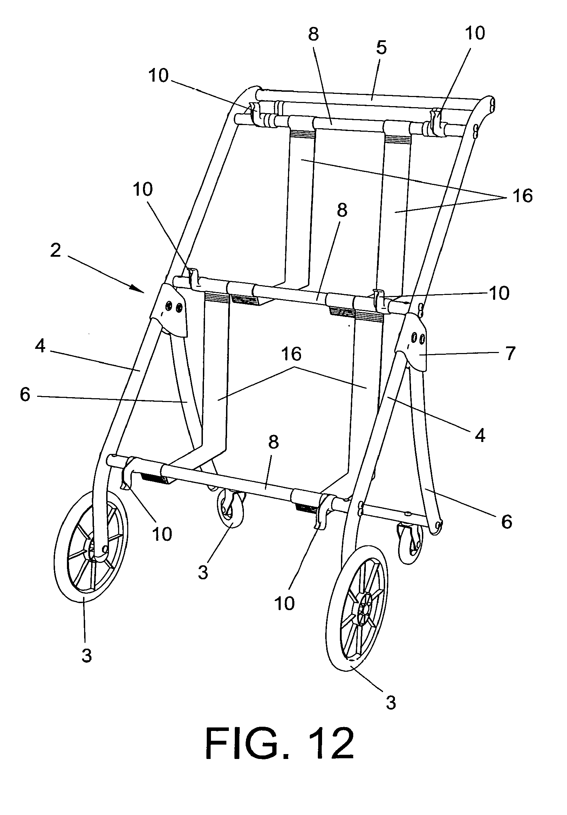

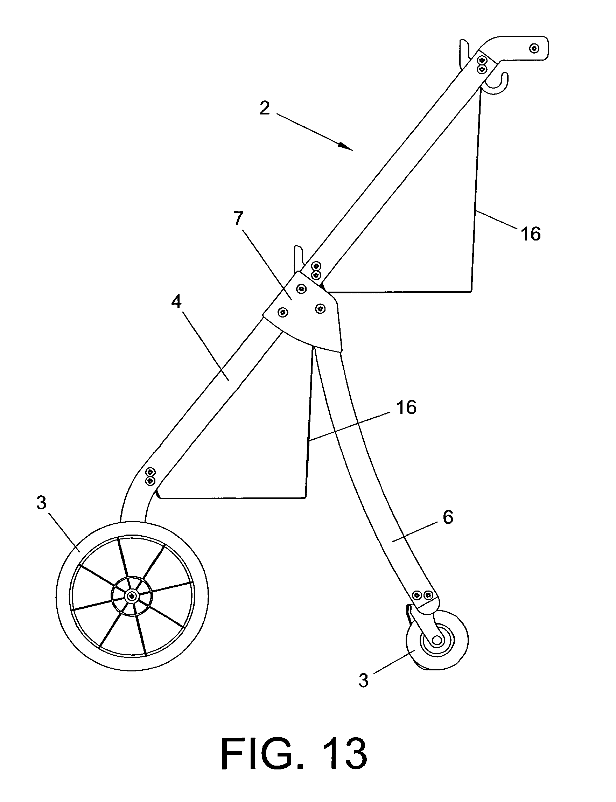

Finally, figure number 14. - Shows a perspective rear view of the same basket example shown in Figures 12 and 13, in this case incorporating the bags, so that we can see the way in which they are arranged on the aforementioned support means.

### PREFERENTIAL REALIZATION OF THE INVENTION

In view of the aforementioned figures and in accordance with the numbering adopted, we can see therein a preferred embodiment of the invention, which comprises the parts and elements indicated and described in detail below.

Thus, as seen in said figures, the trolley (1) in question is formed from a structure (2) folding tubular, preferably of metal, and provided with two or four wheels (3), which is formed essentially by two front legs (4), formed by two parallel tubes collapsible or expandable, joined above by operating a handle (5), and two legs (6), formed by two shorter tubes, which are joined by a hinge superiorly (7) provided in the middle of the front legs (4), for example at the point at which bending or extending said forelegs.

Furthermore, between both pairs of legs (4 and 6) exist, and of characterizing form, several crosspieces
(8) horizontal, arranged in parallel at different heights and distances equidistant, which are incorporated into pouches (9) folded from flexible material, preferably transparent, prismatic configuration, which are fixed to said top and bottom rails (8) by fasteners (10), for example in the form of hooks, provided on its underside at its front and rear upper part, said pockets being dimensioned
(9) in accordance with the dimensions and spacing of the crosspieces (8) of the horizontal structure (2) so that are arranged in stages one above the other, clamped between said crossbars (8) and with the mouth completely open as if Baskets in question.

As seen in Figures 5 to 7, said bags (9) are provided with means for keeping them extended and with the open mouth during use, to fold and being completely flat, said means consisting in a jointed profiles (11) that are planned to set diagonally opposite corners of both sides of the bags (9) being provided also that have higher handles (12) to put and remove them easily and to use them independently as conventional bag.

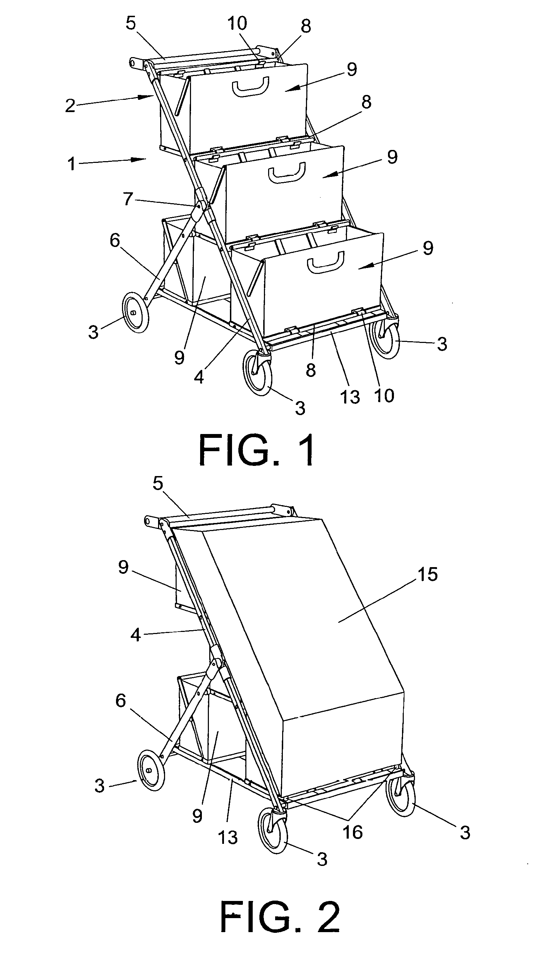

Considering Figures 1 through 4 shows as a first embodiment of the cart, the structure (2) is designed to incorporate four bags, three arranged in staggered front and another at the bottom rear.

To this structure (2), which has four wheels (3), one at each end of the front leg being rotatable, is also provided with a lower platform (13) consists of several tube sections which, for allow folding of the structure (2) is articulated in its front part being connected by articulated joint to said front leg portion, while the rear simply by resting on a lower crosslinking the rear legs (6) apart. Figure 4 shows the structure (2) in the folded position, lies flat occupying minimum space.

However, optionally, said bottom plate (13) may comprise a separate element joined to and supported on beams overlying both in front and in the rear, thus enabling the user to decide its placement in accordance with the needs and the use it to add another bag (9) on it in the back of the cart or leave it free and it can be used for placing other objects or items, for example because of their size, do not fit into one of the bags (9), or to fold the rear legs (6) and drag the cart to get upstairs.

In another embodiment of the invention shown in Figures 8 and 9, the structure (2) described above lacks the lower platform (13) as it is directly aimed at facilitating the ladder climbing (E) has provided that the wheels (3) are oversized compared front to the rear, there being provided also a coupling piece (14) in the bottom of both front legs (4), intended for fixing the rear legs (6) in it and prevent so open the cart up the stairs.

As shown in said figures 8 and 9, in this case the cart only has two bags (9), but they are larger and therefore more capacity each.

Finally, a simplified version of the cart (1) recommended, shown in Figures 10 and 11, also contemplates the elimination of the lower platform (13), removing the wheels of the rear legs (6), so that those hind legs (6) support only act when the cart is stationary.

It should be noted, moreover, the additional presence of a protective cover (15), canvas or other suitable material sized to cover the front of the basket covering at least the mouth of all the bags (9) located in its front, has latching means (16) fast, such as clips or elastic bands to laterally hold the front legs (4) of the structure (2).

It is also noted that the operating handle (5) of the basket (1), constituted by a transverse bar located at the top of the structure (2) is attached at both ends to the upper part of the front legs (4) by a joint with several locking positions allowing you to adjust its height to suit the preferences of each user.

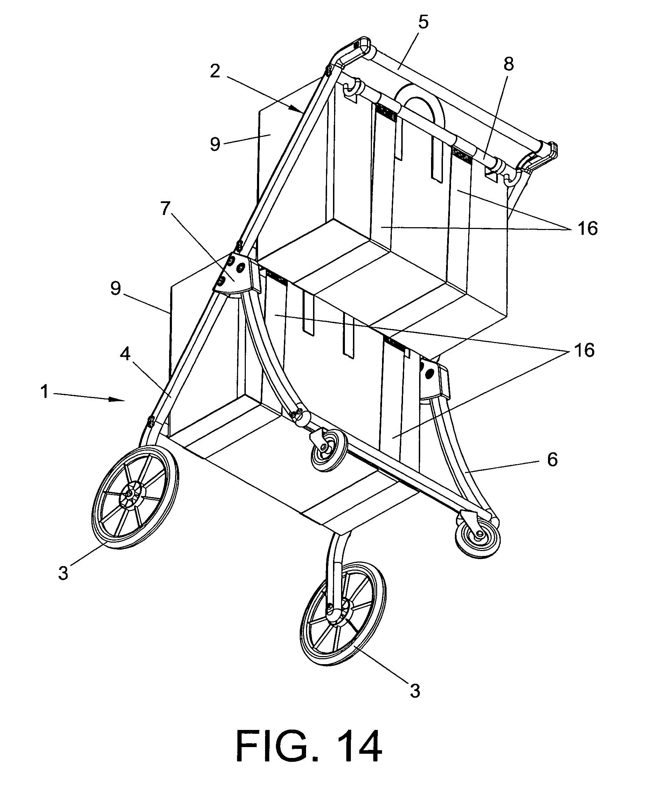

Finally, in response to Figures 12, 13 and 14, there is the additional incorporation into the structure (2) of the basket (1) of support means (16) for the bags (9), which arranged in the spaces between the different beams (8) horizontal, serving for each bag (9) rests on them and prevent twisting by weight, complementing the fasteners (10).

Said support means (16) can be configured as metal plates or hard plastic or other suitably rigid material, layered configuration according to the size and dimensions of the bags (9), as shown in the example represented in said figures 12 to 14, or as strips of fabric, plastic, leather or any other flexible material suitably resistant, provided in any case, preferably in pairs, between each two crosspieces (8) which is incorporated horizontal bag.

Sufficiently described the nature of the present invention, as well as how to implement it, it is not considered necessary to extend his explanation to anyone skilled in the art to understand the scope and benefits that flow from it, and referred to, in its essence, it can be put into practice in other embodiments differ in detail from that shown by way of example, and which will also protect claimed provided it does not alter, change or modify its fundamental principle.

## Claims

1. **FOLDING SHOPPING TROLLEY FOR CARRYING PURCHASES,** configured from a structure (2) with tubular folding wheels (3), formed essentially by two front legs (4), foldable or extensible, an operating handle (5) above, and two legs (6), formed by two tubes joined by shorter articulation (7) in the middle of the front legs (4), **characterized by** the fact of comprising, between the two pairs of legs (4 and 6), several crosspieces (8) Horizontal , arranged in parallel at different heights and distances equidistant incorporating bags (9) folded from flexible material, transparent prismatic configuration and which are removable handles have upper (12) and secured to said upper and lower crossbars (8) by fasteners (10), for example in the form of hooks, being dimensioned such bags (9) in accordance with said crossbars (8) so that are arranged stepwise one above the other, clamped between them and with the mouth fully open and of Baskets if it were.

2. **FOLDING SHOPPING TROLLEY FOR CARRYING PURCHASES,** according to claim 1, **characterized by** the fact that pockets (9) are provided with means for keeping them extended and with the open mouth and to be folded completely flat being constituted by articulated profiles (11) fixed to the vertices two diagonally opposite sides of the bags (9).

3. **FOLDING SHOPPING TROLLEY FOR CARRYING PURCHASES,** according to claim 1, **characterized by** the fact that the structure (2), having four wheels (3), one at each end of the front leg and being rotatable, is provided with a lower platform (13) consisting of several pipe sections, which is articulated in its front part being connected by articulated joint to said front leg portion, while the rear simply by resting on a lower cross linking the rear legs (6) together.

4. **FOLDING SHOPPING TROLLEY FOR CARRYING PURCHASES,** according to claim 1, **characterized by** the fact that the structure (2) is provided with a lower platform (13) consists of several pipe sections, which is a separate element which is incorporated superimposed and supported on crosspieces both in front and in the rear.

5. **FOLDING SHOPPING TROLLEY FOR CARRYING PURCHASES,** according to claim 1, **characterized by** the fact that, having four wheels (3), one at the end of each leg, it is envisaged that wheels (3) are oversized compared front to the rear, having provided also a coupling piece (14) in the bottom of both front legs (4), intended for fixing the rear legs (6) to be folded therein.

6. **FOLDING SHOPPING TROLLEY FOR CARRYING PURCHASES,** according to claim 1, **characterized by** the fact that it has two wheels (3), one at the end of each front leg (4), while the rear legs (6) constitute a fulcrum when the Basket is stopped.

7. **FOLDING SHOPPING TROLLEY FOR CARRYING PURCHASES,** according to claim 1, **characterized by** the fact that it has a protective cover (15), canvas or other material dimensioned to cover the front of the basket covering at least the mouth of all the bags ( 9) located on the front and provided with hooking means (16) fast, such as clips or elastic bands to laterally hold the front legs (4) of the structure (2).

8. **FOLDING SHOPPING TROLLEY FOR CARRYING PURCHASES,** according to claim 1, **characterized by** the fact that the operating handle (5) of the basket (1), constituted by a transverse bar located at the top of the structure (2) is attached at its two the upper ends of the front legs (4) by an articulation with several locking positions allowing adjust its height.

9. **FOLDING SHOPPING TROLLEY FOR CARRYING PURCHASES,** according to claim 1, **characterized in that** it has abutment means (16) for each of the bags (9) arranged between the crosspieces (8) horizontal.

10. **FOLDING SHOPPING TROLLEY FOR CARRYING PURCHASES,** according to claim 9, **characterized by** the fact that the support means (16) of the bags (9) consist of metal plates, hard plastic or other rigid material, layered configuration according to the size and dimensions of bags and arranged in pairs between two studs (8) which is incorporated horizontal bag.

11. **FOLDING SHOPPING TROLLEY FOR CARRYING PURCHASES,** according to claim 9, **characterized by** the fact that the support means (16) of the bags (9) consist of strips of fabric, plastic, leather or other flexible material and resilient, arranged in pairs between each two crosspieces (8) which is incorporated horizontal bag.
